# EUROPÄISCHE PATENTSCHRIFT

(11) **EP 2 889 137 B1**
(45) Veröffentlichungstag und Bekanntmachung des Hinweises auf die Patenterteilung: **21.11.2018**
(21) Anmeldenummer: 14180800.6
(22) Anmeldetag: 13.08.2014
(51) Int. Cl.: B32B 27/12

(54) **Flächengebilde und daraus hergestellte Tischdecke**
Fabric and table cloth made from the same
Structures plates et nappes en étant constituées

(30) Priorität: 19.12.2013 DE 202013105795 U
(43) Veröffentlichungstag der Anmeldung: 01.07.2015
(73) Patentinhaber: Konrad Hornschuch AG, 74679 Weissbach (DE)
(72) Erfinder: Mayer, Sabine, 74613 Öhringen (DE); Waiblinger, Frank, 71563 Affalterbach (DE)
(74) Vertreter: Preusser, Andrea

(56) Entgegenhaltungen:
- WO-A1-03/002640
- WO-A1-2010/071717
- DE-U1-202010 004 386
- US-A1- 2010 056 683
- US-A1- 2010 305 250

## Beschreibung

Die Erfindung betrifft ein Flächengebilde, umfassend eine auf Basis von Weichmacher enthaltendem Polyvinylchlorid (PVC) gebildete Folienschicht.

Derartige Flächengebilde sind bekannt und werden beispielsweise zur Herstellung von Tischdecken verwendet, bei denen die Folienschicht die ggf. mit einem Dekor versehene Ober- bzw. Sichtseite der Tischdecke bildet, die aufgrund der Werkstoffauswahl abwaschbar und fleckbeständig ist. Eine solche Folienschicht kann sowohl einzeln das Flächengebilde definieren als auch auf einem als Träger dienenden Gewebe aufgebracht sein und mit diesem Gewebe gemeinsam das Flächengebilde definieren.

Da solche Flächengebilde insbesondere bei Konfektionierung als Tischdecken oder Tischsets und dergleichen häufig in Kontakt mit Lebensmitteln kommen, wird von derartigen Flächengebilden die Einhaltung der Vorgaben des deutschen Lebensmittelbedarfsgegenstände- und Futtermittelgesetzbuch (LFGB) und der EU-Verordnung Nr. 10/2011 gefordert.

Unter diesem Gesichtspunkt ist nicht nur die Rohstoffauswahl auf entsprechend zugelassene Rohstoffe begrenzt, sondern es müssen auch spezifische und globale Migrationsgrenzwerte eingehalten werden, die durch den hohen Weichmachergehalt bekannter Flächengebilde für die Ausbildung von Tischdecken nicht oder nur unter großen Schwierigkeiten einzuhalten sind. Diese Migrationsgrenzwerte werden üblicherweise mit Lebensmittelsimulantien, z.B. 3% Essigsäure, 50%-Ethanol, Olivenöl geprüft. Da die Prüfung mit Olivenöl in der Praxis sehr aufwendig und fehlerträchtig ist, kann hier mit Ersatzsimulantien, z.B. Isooctan und 95%-Ethanol, geprüft werden. Beide Grenzwerte waren mit bekannten Rezepturen nicht einzuhalten.

Aufgabe der Erfindung ist es daher, ein Flächengebilde der eingangs genannten Art vorzuschlagen, welches u.a. zu Tischdecken verarbeitet werden kann und den eingangs genannten Anforderungen des Lebensmittelrechts genügt.

Zur Lösung der gestellten Aufgabe wird erfindungsgemäß ein Flächengebilde mit den Merkmalen des Schutzanspruchs 1 vorgeschlagen.

Vorteilhafte Ausgestaltungen und Einzelheiten der Erfindung sind Gegenstand der abhängigen Ansprüche.

Der erfindungsgemäße Vorschlag sieht vor, als Weichmacher eine Mischung, umfassend einen phthalatfreien Weichmacher auf Basis von Dioctylterepththalat, einen polymeren Weichmacher auf Basis von Adipinsäure sowie einen Epoxidweichmacher vorzusehen und zu der Folienschicht gemeinsam mit dem eingesetzten Polyvinylchlorid zu verarbeiten.

Überraschenderweise hat sich herausgestellt, dass durch eine solche Abmischung der Weichmacher die Verarbeitbarkeit der Folienschicht im Rahmen des geforderten Flächengebildes nicht beeinträchtigt wird, jedoch die Migrationsgrenzwerte wie gesetzlich gefordert problemlos eingehalten werden können. Damit ist es erstmals möglich, Tischdecken aus einem derartigen Flächengebilde herzustellen, die als lebensmittelrechtlich unbedenklich gelten können.

Als polymerer Weichmacher kann ein Polyadipat vorgesehen sein, welches in Form von Adipinsäurepolyester handelsüblich erhältlich ist.

Der Epoxidweichmacher gemäß der Erfindung kann beispielsweise von epoxidiertem Sojabohnenöl gebildet werden.

Der phthalatfreie Weichmacher und der polymere Weichmacher werden nach einem Vorschlag der Erfindung jeweils in einer Menge von 6 bis 60 Gewichtsteilen, vorzugsweise 15 bis 45 Gewichtsteilen pro 100 Gewichtsteile PVC und der Epoxidweichmacher in einer Menge von 2 bis 20 Gewichtsteilen, vorzugsweise 4 bis 18 Gewichtsteilen pro 100 Gewichtsteile PVC eingesetzt, um eine erfindungsgemäße Weichmachermischung zu bilden.

Die Folienschicht kann vorteilhaft auf Basis von S-PVC gebildet sein, wobei weiter bevorzugt das S-PVC einen K-Wert von 62 bis 68, vorzugsweise 65 aufweisen kann.

Darüber hinaus kann die Folienschicht bis zu 10 Gewichtsteile eines hochmolekularen PVC bezogen auf das eingesetzte S-PVC umfassen, um die Verarbeitbarkeit zu verbessern und insbesondere die Möglichkeit zu geben, die Folienschicht oberflächlich zu prägen und auf diese Weise zu strukturieren.

In an sich bekannter Weise kann die Folienschicht auf die Oberseite eines textilen Trägers aufgebracht, z.B. aufkaschiert sein. Als textile Träger kommen z.B. Gewebe, Vliese, Gewirke, Gestricke, Gelege und dergleichen in Betracht.

Ein solcher textiler Träger kann erfindungsgemäß auf Basis von Celluloseviskose gebildet sein und wird auf die Folienschicht kaschiert.

Hierbei kann vorgesehen sein, die Folienschicht mit bis zu 50 Gew.-% eines Pfropfcopolymer auf Basis von PVC und Polyacrylester zu modifizieren, um die Folienschicht weicher einzustellen und die benötige Menge an Weichmachern zu reduzieren, da es ebenfalls weichmachende Wirkung zeigt und zusätzlich Monomer-Weichmacher gut hält. Durch den Zusatz des Copolymers kann insoweit die Weichmachermenge reduziert werden, ohne die Shore-Härte zu verändern. Dadurch wird ferner die Einhaltung der lebensmittelrechtlichen Anforderungen, insbesondere der Migrationsanforderungen, bedeutend erleichtert.

Der textile Träger und/oder die Folienschicht können darüber hinaus in an sich bekannter Weise Füllstoffe und/oder Stabilisatoren enthalten, wobei als Füllstoffe insbesondere gecoatete Kreide und Pigmente zu nennen sind. Als Stabilisatoren kommen im Hinblick auf das gewünschte Anwendungsfeld insbesondere Metallseifen auf Basis von Calcium/Zink-Verbindungen in Frage, die handelsüblich als so genannte Ca/Zn-Stabilisatoren erhältlich sind.

Neben der bereits erwähnten Prägung der Folienschicht ist es auch möglich, diese zu bedrucken, wobei als Druckverfahren insbesondere das so genannte Transferdruckverfahren Anwendung finden kann. Hierbei wird auf eine Trägerfolie aus PET oder PP das gewünschte Druckdekor in umgekehrter Reihenfolge aufgedruckt und die enthaltenen Lösungsmittel werden abgelüftet. Danach wird die Trägerfolie auf die Folienschicht des erfindungsgemäßen Flächengebildes unter Ausübung von Druck und Temperatur aufkaschiert. Der Druck wandert unter diesen Bedingungen auf die Oberfläche der Folienschicht und die Transferfolie kann nachfolgend abgezogen werden. Unter Anwendung dieses Verfahrens werden nur sehr geringe Restlösungsmittelkonzentrationen erreicht, die für die lebensmittelrechtliche Zulassung erforderlich sind.

Die Herstellung des erfindungsgemäßen Flächengebildes erfolgt bevorzugt durch Kalandrieren, wobei die Folienschicht als Kalanderfolie in an sich bekannter Weise hergestellt wird und während der Herstellung im Kalander ggf. ein entsprechender textiler Träger zukaschiert wird.

Weitere Ausgestaltungen und Einzelheiten der Erfindung werden nachfolgend anhand eines Ausführungsbeispiels erläutert.

Zur Herstellung eines für die Konfektionierung als Tischdecke geeigneten Flächengebildes wurde eine Folie aus auf Basis von S-PVC mit einem K-Wert von 65 unter Zusatz eines Pfropfcopolymers auf Basis von PVC und Polyacryester hergestellt. Die PVC-Mischung enthielt eine Weichmachermischung aus Dioctylterephthalat, Polyadepat und epoxidiertem Sojabohnenöl sowie einen Ca/Zn-Stabilisator sowie gecoatete Kreide und Pigmente als Füllstoffe sowie ein hochmolekulares acrylisches Polymer als Verarbeitungshilfsmittel.

Die eingesetzten Mengenanteile sind in Tabelle 1 angegeben.

**Tabelle 1**

| Rohstoff | Menge (Gewichtsteile) |
|---|---|
| S-PVC, K-Wert 65 | 133 |
| PVC/Polyacrylesterpfropfcopolymer | 33 |
| Dioctylterephthalat | 42 |
| Polyadipat | 42 |
| Epoxidiertes Sojabohnenöl | 6 |
| Ca/Zn-Stabilisator | 6 |
| Gecoatete Kreide | 31 |
| Pigment | 16 |
| Hochmolekulares acrylisches Polymer | 2 |

Diese Folie wurde auf ein als textiler Träger dienendes Gewebe aus Celluloseviskose kaschiert. Ein weiteres Flächengebilde bestehend aus einer PVC-Folienschicht wurde hergestellt. Diese Folienschicht enthielt eine Mischung aus S-PVC mit einem K-Wert von 65 sowie hochmolekulares PVC und eine Weichmachermischung umfassend Dioctylterephthalat, Polyadipat und epoxidiertes Sojabohnenöl, ferner einen Ca/Zn-Stabilisator sowie gecoatete Kreide und Pigmente als Füllstoffe. Die Mengenangaben sind der Tabelle 2 entnehmbar.

**Tabelle 2**

| Rohstoff | Menge (Gewichtsteile) |
|---|---|
| S-PVC K-Wert 65 | 160 |
| Hochmolekulares PVC | 8 |
| Dioctylterephthalat | 32 |
| Polyadipat | 20 |
| Epoxidiertes Sojabohnenöl | 12 |
| Ca/Zn-Stabilisator | 6 |
| Gecoatete Kreide | 12 |
| Pigment | 8 |

Die solchermaßen hergestellten Flächengebilde wurden auf die Einhaltung der gesetzlichen Vorgaben im LFGB und der EU-Verordnung 10/2011 getestet, insbesondere auf Einhaltung der Migrationsgrenzwerte, die u.a. mit Isooctan geprüft wurden. Alle entsprechenden Grenzwerte wurden unterschritten, so dass die erfindungsgemäßen Flächengebilde zur Herstellung von für Lebensmittelkontakt zugelassenen Tischdecken geeignet sind.

## Patentansprüche

1. Flächengebilde, umfassend eine auf Basis von Weichmacher enthaltendem Polyvinylchlorid (PVC) gebildete Folienschicht, **dadurch gekennzeichnet, dass** als Weichmacher eine Mischung umfassend einen phthalatfreien Weichmacher auf Basis von Dioctylterephthalat, einen polymeren Weichmacher auf Basis von Adipinsäure sowie einen Epoxidweichmacher vorgesehen ist.

2. Flächengebilde nach Anspruch 1, **dadurch gekennzeichnet, dass** als polymerer Weichmacher ein Polyadipat vorgesehen ist.

3. Flächengebilde nach Anspruch 1 oder 2, **dadurch gekennzeichnet, dass** als Epoxidweichmacher epoxidiertes Sojabohnenöl vorgesehen ist.

4. Flächengebilde nach einem der Ansprüche 1 bis 3, **dadurch gekennzeichnet, dass** der phthalatfreie Weichmacher und der polymere Weichmacher jeweils in einer Menge von 6 bis 60 Gewichtsteilen, vorzugsweise 15 - 45 Gewichtsteilen pro 100 Gewichtsteile PVC und der Epoxidweichmacher in einer Menge von 2 bis 20 Gewichtsteilen, vorzugsweise 4 bis 18 Gewichtsteilen pro 100 Gewichtsteile PVC verwendet ist.

5. Flächengebilde nach einem der Ansprüche 1 bis 4, **dadurch gekennzeichnet, dass** die Folienschicht auf Basis von S-PVC gebildet ist.

6. Flächengebilde nach Anspruch 5, **dadurch gekennzeichnet, dass** die Folienschicht bis zu 10 Gewichtsteile eines hochmolekularen PVC bezogen auf das eingesetzte S-PVC umfasst.

7. Flächengebilde nach einem der Ansprüche 1 bis 6, **dadurch gekennzeichnet, dass** die Folienschicht auf einen textilen Träger aufgebracht ist.

8. Flächengebilde nach Anspruch 7, **dadurch gekennzeichnet, dass** der textile Träger auf Basis von Celluloseviskose gebildet ist.

9. Flächengebilde nach Anspruch 7 oder 8, **dadurch gekennzeichnet, dass** die Folienschicht aus einer Mischung von S-PVC mit bis zu 50 Gew.-% eines Pfropfcopolymers auf Basis von PVC und Polyacrylester gebildet ist.

10. Flächengebilde nach einem der Ansprüche 1 bis 9, **dadurch gekennzeichnet, dass** der textile Träger und/oder die Folienschicht Füllstoffe und/oder Stabilisatoren enthält.

11. Flächengebilde nach Anspruch 10, **dadurch gekennzeichnet, dass** als Füllstoffe Kreide und Pigmente vorgesehen sind.

12. Flächengebilde nach Anspruch 10 oder 11, **dadurch gekennzeichnet, dass** als Stabilisator ein Ca/Zn-Stabilisator vorgesehen ist.

13. Flächengebilde nach einem der Ansprüche 1 bis 12, **dadurch gekennzeichnet, dass** die Folienschicht geprägt und/oder bedruckt ist.

14. Tischdecke, hergestellt aus einem Flächengebilde gemäß einem der vorhergehenden Ansprüche.

## Claims

1. Sheetlike structure comprising a foil layer formed on the basis of plasticizer-containing polyvinyl chloride (PVC), **characterized in that** said plasticizer comprises a mixture comprising a phthalate-free plasticizer based on dioctyl terephthalate, a polymeric plasticizer based on adipic acid, and an epoxide plasticizer.

2. Sheetlike structure according to Claim 1, **characterized in that** said polymeric plasticizer comprises a polyadipate.

3. Sheetlike structure according to Claim 1 or 2, **characterized in that** said epoxide plasticizer comprises epoxidized soyabean oil.

4. Sheetlike structure according to any of Claims 1 to 3, **characterized in that** the phthalate-free plasticizer and the polymeric plasticizer are each used in an amount of 6 to 60 parts by weight, preferably 15 - 45 parts by weight, per 100 parts by weight of PVC, and the epoxide plasticizer is used in an amount of 2 to 20 parts by weight, preferably 4 to 18 parts by weight, per 100 parts by weight of PVC.

5. Sheetlike structure according to any of Claims 1 to 4, **characterized in that** the foil layer is formed on the basis of S-PVC.

6. Sheetlike structure according to Claim 5, **characterized in that** the foil layer comprises up to 10 parts by weight of a high molecular mass PVC, based on the S-PVC used.

7. Sheetlike structure according to any of Claims 1 to 6, **characterized in that** the foil layer is applied on a textile carrier.

8. Sheetlike structure according to Claim 7, **characterized in that** the textile carrier is formed on the basis of cellulose viscose.

9. Sheetlike structure according to Claim 7 or 8, **characterized in that** the foil layer is formed of a mixture of S-PVC with up to 50 wt% of a graft copolymer based on PVC and polyacrylic ester.

10. Sheetlike structure according to any of Claims 1 to 9, **characterized in that** the textile carrier and/or the foil layer comprises fillers and/or stabilizers.

11. Sheetlike structure according to Claim 10, **characterized in that** said fillers comprise chalk and pigments.

12. Sheetlike structure according to Claim 10 or 11, **characterized in that** said stabilizer comprises a Ca/Zn stabilizer.

13. Sheetlike structure according to any of Claims 1 to 12, **characterized in that** the foil layer is embossed and/or printed.

14. Tablecloth produced from a sheetlike structure according to any of the preceding claims.

## Revendications

1. Structure plate, comprenant une couche de film formée à base de polychlorure de vinyle (PVC) contenant des plastifiants, **caractérisée en ce qu'**un mélange comprenant un plastifiant sans phthalate à base de dioctyltéréphtalate, un plastifiant polymère à base d'acide adipique et un plastifiant époxyde est prévu en tant que plastifiant.

2. Structure plate selon la revendication 1, **caractérisée en ce qu'**un polyadipate est prévu en tant que plastifiant polymère.

3. Structure plate selon la revendication 1 ou 2, **caractérisée en ce que** de l'huile de soja époxydée est prévue en tant que plastifiant époxyde.

4. Structure plate selon l'une quelconque des revendications 1 à 3, **caractérisée en ce que** le plastifiant sans phtalate et le plastifiant polymère sont utilisés respectivement en une quantité de 6 à 60 parties en poids, de préférence de 15 à 45 parties en poids, pour 100 parties en poids de PVC, et le plastifiant époxyde en une quantité de 2 à 20 parties en poids, de préférence de 4 à 18 parties en poids, pour 100 parties en poids de PVC.

5. Structure plate selon l'une quelconque des revendications 1 à 4, **caractérisée en ce que** la couche de film est formée à base de S-PVC.

6. Structure plate selon la revendication 5, **caractérisée en ce que** la couche de film comprend jusqu'à 10 parties en poids d'un PVC de poids moléculaire élevé par rapport au S-PVC utilisé.

7. Structure plate selon l'une quelconque des revendications 1 à 6, **caractérisée en ce que** la couche de film est appliquée sur un support textile.

8. Structure plate selon la revendication 7, **caractérisée en ce que** le support textile est formé à base de viscose de cellulose.

9. Structure plate selon la revendication 7 ou 8, **caractérisée en ce que** la couche de film est formée à partir d'un mélange de S-PVC avec jusqu'à 50 % en poids d'un copolymère greffé à base de PVC et d'ester polyacrylique.

10. Structure plate selon l'une quelconque des revendications 1 à 9, **caractérisée en ce que** le support textile et/ou la couche de film contiennent des charges et/ou des stabilisateurs.

11. Structure plate selon la revendication 10, **caractérisée en ce que** de la craie et des pigments sont prévus en tant que charges.

12. Structure plate selon la revendication 10 ou 11, **caractérisée en ce qu'**un stabilisateur Ca/Zn est prévu en tant que stabilisateur.

13. Structure plate selon l'une quelconque des revendications 1 à 12, **caractérisée en ce que** la couche de film est gravée et/ou imprimée.

14. Dessus de table, fabriqué à partir d'une structure plate selon l'une quelconque des revendications précédentes.
